# EUROPÄISCHE PATENTANMELDUNG

(11) **EP 2 216 353 A1**
(43) Veröffentlichungstag der Anmeldung: **11.08.2010**
(21) Anmeldenummer: 09001801.1
(22) Anmeldetag: 10.02.2009
(51) Int. Cl.: C08G 18/08, C08G 18/12, C08G 18/77, C08G 18/44, C09D 175/04, C08J 7/04

(54) **Trägerfolie mit Polyurethan-Beschichtung**

(71) Anmelder: Bayer MaterialScience AG, 51368 Leverkusen (DE)
(72) Erfinder: Irle, Christoph, Dr., 41539 Dormagen (DE); Klein, Andreas, 51381 Leverkusen (DE); Petzoldt, Joachim, Dr., 40789 Monheim (DE); Yuva, Nusret, 51399 Burscheid (DE)

(57) **Zusammenfassung**

Die Erfindung betrifft eine beschichtete Trägerfolie, welche eine thermoplastische Trägerfolie sowie einen Polyurethan-Lack als Beschichtung aufweist, ein Verfahren zu deren Herstellung und deren Verwendung zur Ausrüstung von Kunststoffformteilen.

## Beschreibung

Die Erfindung betrifft eine beschichtete Trägerfolie, welche eine thermoplastische Trägerfolie sowie einen Polyurethan-Lack als Beschichtung aufweist, ein Verfahren zu deren Herstellung und deren Verwendung zur Ausrüstung von Kunststoffformteilen.

Die Oberfläche vieler thermoplastischer Kunststoffe ist in Bezug auf ihre mechanische und chemische Beständigkeit relativ empfindlich. Auch die direkte Farbgebung durch Einfärben des Substrats ist bezüglich der zu erzielenden Farbtöne und Effekte limitiert. Darüber hinaus können beim Spritzguss sichtbare Oberflächendefekte, zum Beispiel Fließlinien, entstehen, die für Anwendungen im Sichtbereich inakzeptabel sind.

Geschäumte Bauteile weisen zudem häufig Oberflächendefekte und/oder Poren auf, die eine fehlerfreie Lackierung erheblich erschweren. Speziell nach eventuellen Schleifoperationen müssen die betroffenen Teile vor einer Lackierung manuell gespachtelt werden.

Die Lackierung von Kunststoffformteilen zur Erreichung der geforderten Beständigkeitseigenschaften und des gewünschten optischen Erscheinungsbildes ist allgemein bekannt. Im Bereich hochwertiger Kunststoffteile mit entsprechenden Anforderungen an Mechanik, Beständigkeit und Langlebigkeit dominieren Lacke auf Polyurethanbasis, die einen Kompromiss zwischen einer, an die flexiblen Substrate angepasste, Mechanik und den geforderten Beständigkeitseigenschaften darstellen.

Verbundelemente aus Lackschicht und Kunststoffbauteil werden in der Regel durch nachträgliche Lackierung im Spritz- oder Tauchverfahren des zuvor geschäumten oder im Spritzguss produzierten Bauteils hergestellt. Insbesondere im Automobilbau ist dies die bevorzugte Vorgehensweise zur Herstellung großflächiger Bauteile oder solcher mit komplexer Geometrie. Dieses nachträgliche Aufbringen der Lackschicht erfordert eine Vielzahl separater Arbeitschritte, die zum Teil manuell ausgeführt werden müssen und nicht automatisierbar sind. Darüber hinaus können bestimmte Teilflächen des Bauteils nur sehr aufwändig beschichtet werden. Bei der Lackierung dreidimensionaler Körper ist ferner mit einem nicht unerheblichen Materialverlust des Lackes, des so genannten Oversprays, zu rechnen. Darüber hinaus ist die Fehlerrate bei der Lackierung dreidimensionaler Teile deutlich höher, als bei der technisch einfacheren Beschichtung zweidimensionaler Folien.

Um zu einem effizienten, Rohstoff sparenden und kostengünstigen Prozess zu gelangen, sind Verfahren bekannt, bei denen zunächst Kunststofffolien mittels gängiger Lackierverfahren wie Rakeln, Walzen oder Spritzen großflächig beschichtet werden und diese Beschichtung durch physikalische Trocknung oder Teilhärtung nahezu klebfrei antrocknet. Diese Folien können dann bei erhöhten Temperaturen verformt und anschließend verklebt, hinterspritzt oder hinterschäumt werden. Dieses Konzept bietet viel Potential für die Herstellung zum Beispiel von Bauteilen durch Kunststoffverarbeiter, wobei der aufwendigere Lackierschritt dreidimensionaler Bauteile durch die einfachere Beschichtung eines flächigen Substrats ersetzt werden kann.

EP-A 1 647 399 beschreibt Verbundformteile bestehend aus einer Trägerfolie und auf dieser Folie aufgebrachten Soft-Touch Lack. Diese Trägerfolie dient zur Hinterspritzung oder Hinterpressung mit Thermoplasten, ohne dass dabei die Soft-Touch-Lackschicht beschädigt wird. Es treten zum Beispiel keine Glanzstellen und keine Risse in der Lackschicht auf. Die in der Lackformulierung enthaltene Polyolkomponente enthält neben Bausteinen, die mit dem Polyisocyanatvernetzer chemisch reagieren, auch elastifizierende, hydroxyl- und/oder amingruppenfreie Polyurethane. Diese trocknen ausschließlich physikalisch und vernetzen nicht durch eine chemische Reaktion auf dem Substrat. Daher erreichen solche Beschichtungen nicht das hohe Niveau an Kratz- und Chemikalienfestigkeit vollständig chemisch ausreagierender Lacke.

In aller Regel setzen gute Oberflächeneigenschaften eine hohe Vernetzungsdichte der Beschichtung voraus. Nachteilig an hohen Vernetzungsdichten ist jedoch, dass diese zu duromerem Verhalten mit maximal möglichen Verstreckungsgraden von nur wenigen Prozent führen, so dass die Beschichtung während des Verformvorganges zur Rissbildung neigt.

Darüber hinaus ist für eine wirtschaftliche Anwendung dieses Verfahrens das zwischenzeitliche Aufwickeln der beschichteten, verformbaren Folie auf Rollen notwendig. Die dabei in den Rollen auftretenden Druck- und Temperaturbelastungen, stellen besondere Anforderungen an die Blockfestigkeit der Beschichtung. Blockfestigkeit bedeutet dabei der Verklebungseffekt, der bei dem Zusammenfügen zweier beschichteter Flächen unter Belastungen wie Temperatur oder Druck entsteht. Dieser offensichtliche Konflikt zwischen erforderlicher hoher Vernetzungsdichte und angestrebtem hohen Verstreckungsgrad kann gelöst werden, zum Beispiel indem die Trocknung/Härtung der Beschichtung in zwei Schritten, vor und nach der Verformung, durchgeführt wird. Insbesondere geeignet für eine Nachhärtung ist eine strahlungsinduzierte Vernetzungsreaktion in der Beschichtung.

In der WO-A 2005/099943 wird ein flexibler Schichtverbund mit einem Träger und mindestens einer auf den Träger aufgebrachten Schicht eines härtbaren Lackes, bei dem der Lack ein doppelbindungshaltiges Bindemittel mit einer Glasübergangstemperatur Tg zwischen -15°C bis 20°C enthält, der nach thermischer Trocknung nicht klebrig ist. In der WO-A 2005/099943 wird weiterhin beschrieben, dass die Beschichtung aufgrund der niedrigen Tg staubanfällig sein kann.

Im Beispiel wird ein Trocknungsgrad/eine Blockfestigkeit der Beschichtung vor der Strahlungshärtung erreicht, bei der nach einer Belastung von 500 g/cm² für 60 s bei 10 °C noch Abprägungen eines Filterpapiers sichtbar sind. Die Belastungen auf eine Beschichtung in einer Folienrolle sind Druck und Temperatur betreffend üblicherweise höher. Die Möglichkeit, die Folien vor der Strahlungshärtung des Lacks auf Rollen aufzuwickeln, wird daher auch in dieser Schrift nicht beschrieben. Nachteil dieses Verfahrens ist darüber hinaus die Notwendigkeit einer Strahlungsbehandlung der dreidimensionalen fertigen Teile, um die gewünschten Beständigkeitseigenschaften zu erzielen. Die Aushärtung des Lackes in so genannten Schattenregionen des Bauteils ist damit nicht immer sicher gewährleistet.

Die Aufgabe der vorliegenden Erfindung bestand somit in der Bereitstellung einer Trägerfolie, die eine Beschichtung auf Basis eines wässrigen Polyurethan-Lacks enthält, die ein hohes Niveau an Kratz- und Chemikalienfestigkeit bei gleichzeitig hohen Verstreckungsgraden aufweist. Darüber hinaus sollte sich die Verbundfolie auf Rollen wickeln lassen, ohne dass dabei die Beschichtung Risse zeigt. Dabei sollte ebenfalls eine hohe Blockfestigkeit gegeben sein, d.h. dass die Verbundfolie sollte sich auch ohne zu verkleben problemlos von der Rolle abwickeln lassen.

Es wurde nun gefunden, dass spezielle wässrige Polyurethan-Lacke als Beschichtung auf thermoplastischen Trägerfolien diese Aufgabe lösen.

Gegenstand der vorliegenden Erfindung ist eine beschichtete Trägerfolie, die aus
I) einer thermoplastischen Trägerfolie und
II) mindestens einer Beschichtung auf Basis eines wässrigen Zweikomponenten(2K)-Polyurethanlackes aufgebaut ist, **dadurch gekennzeichnet, dass** der 2K-Polyurethan-Lack
   A) mindestens eine hydroxyfunktionelle Polyesterpolyurethan-Dispersion sowie
   B) mindestens einen Polyisocyanat-Vernetzer enthält.

Gegebenenfalls kann der 2K-Polyurethan-Lack weitere Hilfsstoffe und Zusatzmittel C) enthalten.

Das Vernetzungsverhältnis aus Isocyanat-Gruppen aus B) und Hydroxy-Gruppen aus A) liegt zwischen 1,0:1 und 1,6 : 1. Bevorzugt beträgt das Vernetzungsverhältnis 1,2:1 bis 1,4 :1.

Die Polyesterpolyurethan-Dispersion A) enthält als Aufbaukomponenten
a1) lineare oder verzweigte, hydroxyfunktionelle Polyester,
a2) lineare, hydroxyfunktionelle Polycarbonate,
a3) mindestens eine ionische oder potentiell ionische Verbindung mit mindestens einer Säuregruppe und mindestens einer gegenüber Isocyanatgruppen reaktionsfähigen Gruppe,
a4) mindestens ein (cyclo)aliphatisches Diisocyanat sowie
a5) niedermolekulare hydroxy- und/ oder aminofunktionelle Verbindungen.

Die Herstellung der Polyesterpolyurethan-Dispersion A) erfolgt durch Polyaddition der Komponenten a1) bis a5) und anschließender Neutralisation der Carbonsäure und Dispergierung in Wasser.

Bei den Komponenten a5) handelt es sich bevorzugt um niedermolekulare Verbindungen des Molgewichts Mn 62 bis 400 g/mol die in Summe über zwei oder mehr, bevorzugt drei Hydroxyl- und/oder Aminogruppen verfügen.

Bevorzugte Polyesterpolyurethan-Dispersionen A) enthalten 20 bis 50 Gew.-%, bevorzugt 30 bis 40 Gew.-% Komponente a1), 20 bis 50 Gew.-%, bevorzugt 30 bis 40 Gew.-% Komponente a2), 2 bis 6 Gew.-%, bevorzugt 3 bis 5 Gew.-% Komponente a3), 10 bis 30 Gew.-%, bevorzugt 15 bis 25 Gew.-% Komponente a4) 0,5 bis 10 Gew.-%, bevorzugt 2 bis 5 Gew.-% Komponente a5), wobei sich die Prozentangaben a1) bis a5) zu 100 Gew.-% ergänzen.

Die zur Stabilisierung der Dispersion über die Komponente a3) eingebauten Säuregruppen liegen zu 40 bis 120 %, bevorzugt 50 bis 80 % als Salzgruppen vor.

Die über die Komponente a3) eingebauten Säurezahlen der hydroxyfunktionellen Polyesterpolyurethan-Dispersionen A) liegen bei 5,0 bis 14,5 mg KOH/g Substanz, bevorzugt bei 8,0 bis 11 mg KOH/g Substanz, jeweils bezogen auf die wässrige Dispersion des Polyester-Polyurethans.

Das mittlere Molekulargewicht M_{w} der Polyesterpolyurethan-Dispersion A), bestimmbar z.B. per Gelpermeationschromatographie mit Polystyrol als Standard, liegt bei 3.000 bis 30.000 g/mol, bevorzugt bei 5.000 bis 15.000 g/mol, besonders bevorzugt 6.000 bis 10.000 g/mol und damit wesentlich niedriger als z.B. bei Polyurethan-Dispersionen nach dem Stand der Technik.

Die in der Polyesterpolyurethan-Dispersion A) enthaltenen Polyester a1) können nach an sich bekannten Verfahren unter Abspaltung von Wasser bei Temperaturen von 100 bis 260°C, gegebenenfalls unter Mitverwendung üblicher Veresterungskatalysatoren, vorzugsweise nach dem Prinzip einer Schmelz- oder Azeotropkondensation, hergestellt werden. Bevorzugtes Herstellverfahren für die Polyester a1) ist eine Schmelzkondensation im Vakuum oder unter Einsatz eines Inertgases.

Es können dabei auch Mischungen verschiedener Polyester und auch Mischungen von Polyestern mit unterschiedlichen Funktionalitäten eingesetzt werden, wobei die durchschnittliche Funktionalität der Polyester a1) zwischen 1,8 und 2,5, bevorzugt 1,9 und 2,1 und besonders bevorzugt von 2,0 liegt.

Die Polyester a1) haben rechnerisch ermittelte theoretische Molekulargewichte von 500 bis 3000 g/Mol, bevorzugt von 500 bis 1000 g/Mol.

Das theoretische Molekulargewicht der Polyester wird bestimmt nach der Formel: Masse des Ansatzes [g] / (Mol COOH + Mol OH)- Val COOH.

Bevorzugt eingesetzte Polyester a1) sind Umsetzungsprodukte von
a1ᵢ) 30 bis 77 Gew.-%, bevorzugt 40 bis 60 Gew.-% mindestens einer, mindestens difunktionellen Carbonsäure bzw. deren Anhydrids,
a1ᵢᵢ) 23 bis 70 Gew.-%, bevorzugt 40 - 60 Gew.-% mindestens eines Diols,
a1ᵢᵢᵢ) 0 bis 10 Gew.-% mindestens eines Alkohols mit mehr als 2 Hydroxylgruppen,
a1ᵢᵥ) 0 bis 10 Gew.-% sonstige hydroxy- und/oder carboxyfunktioneller Komponenten und/oder Caprolacton.

Geeignete Polyesterrohstoffe a1ᵢ) sind z.B. Phthalsäureanhydrid, Isophthalsäure, Terephthalsäure, Adipinsäure, Sebacinsäure, Korksäure, Bernsteinsäure, Maleinsäureanhydrid, Fumarsäure, Dimerfettsäuren, Tetrahydrophthalsäureanhydrid, Hexahydrophthalsäureanhydrid, Cyclohexandicarbonsäure und/oder Trimellithsäureanhydrid ode deren Mischungen.

Bevorzugte Komponenten a1ᵢ) sind Adipinsäure, Phthalsäureanhydrid, Tetrahydrophthalsäureanhydrid, Isophthalsäure oder Glutarsäure, besonders bevorzugt sind Adipinsäure und Hexahydrophthalsäure oder Phthalsäure sowie deren Anhydride.

Geeignete Polyesterrohstoffe a1ᵢᵢ) sind z.B. 1,2-Ethylengykol, Diethylenglykol, Triethylenglykol, Tetraethylenglykol, 1,2-Propylenglykol, Dipropylenglykol, Tripropylenglykol, 1,3-Propandiol, 1,3-Butandiol, 1,4-Butandiol, 1,6-Hexandiol, Neopentylgylkol, 1,4-Cyclohexandimethanol, 1,4-Cyclohexandiol, Butendiol, Butindiol, hydrierte Bisphenole, Trimethylpentandiol, 1,8-Octandiol und/oder Tricyclodecandimethanol sowie deren Mischungen.

Bevorzugte Komponenten a1ᵢᵢ) sind 1,4-Butandiol, Neopentylglykol, 1,2-Propylenglykol, Ethylenglykol, Diethylenglykol oder 1,6-Hexandiol.

Bevorzugte Komponenten a1ᵢᵢ) sind Neopentylglykol, Butandiol und Hexandiol.

Geeignete Polyesterrohstoffe a1ᵢᵢᵢ) sind z.B. Trimethylolpropan, ethoxyliertes Trimethylolpropan, propoxyliertes Trimethylolpropan, propoxyliertes Glycerin, ethoxyliertes Glycerin, Glycerin, Pentaerythrit, Rizinusöl sowie deren Mischungen.

Bevorzugte Komponente a1ᵢᵢᵢ) ist Trimethylolpropan.

Geeignete optional einzusetzende Polyesterrohstoffe a1ᵢᵥ) sind z.B. C₈-C₂₂-Fettsäuren wie z.B. 2-Ethylhexansäure, Stearinsäure, hydrierte Fettsäuren, Benzoesäure, monofunktionelle Alkohole wie Butylglykol, Butyldiglykol, Cyclohexanol, andere monofunktionelle Alkohole wie z.B. Polyethylenoxide, Polypropylenoxide, Polyethylen/propylenoxidmisch- bzw. Blockcopolymere sowie deren Mischungen.

Bei der Aufbaukomponente a2) handelt es sich um lineare, hydroxfunktionelle Polycarbonate. Geeignete Polycarbonate a2) sind solche, die z.B. durch Reaktion von Kohlensäwederivaten, z.B. Diphenylcarbonat, Dimethylcarbonat oder Phosgen mit Polyolen, bevorzugt Diolen erhältlich sind. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lactonmodifizierte Diole in Frage. Bevorzugt enthält die Diolkomponente 40 bis 100 Gew.-% Hexandiol, bevorzugt 1,6-Hexandiol und/oder Hexandiol-Derivate, bevorzugt solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden. Auch Polyether-Polycarbonatdiole können eingesetzt werden. Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, Sorbit, Methylglykosid oder 1,3,4,6-Dianhydrohexite. Die Herstellung der Polycarbonatpolyole erfolgt bevorzugt nach dem in der EP-A 1 404 740 (S. 6-8, Beispiele 1-6) und EP-A 1 477 508 (S. 5, Beispiel 3) beschriebenen Herstellverfahren.

Besonders bevorzugte Polycarbonatpolyole a2) sind solche, die mindestens 25 Gew.-% 1,4-Butandiol als Aufbaukomponente enthalten und eine mittlere Hydroxylfunktionalität von 1,6 bis 4, bevorzugt, 1,8 bis 3 und besonders bevorzugt 1,9 bis 2,3 und ein zahlenmittleres Molekulargewicht von 240 bis 8000 g/mol, bevorzugt von 500 bis 3000 g/mol, besonders bevorzugt von 750 bis 2500 g/mol aufweisen. Bevorzugt enthält die Diolkompomponente 45 bis 100 Gew.-% 1,4-Butandiol, und 1 bis 55 Gew.-% 1,6-Hexandiol, besonders bevorzugt 60 bis 100 Gew.-% 1,4-Butandiol und 1 bis 40 Gew.-% 1,6-Hexandiol.

Die Hydroxylpolycarbonate sind bevorzugt linear, können jedoch gegebenenfalls durch den Einbau polyfunktioneller Komponenten, insbesondere niedermolekularer Polyole, verzweigt werden. Besonders bevorzugte Komponenten a2) basieren auf Gemischen von 1,4-Butandiol und 1,6-Hexandiol und haben eine mittlere Hydroxylfunktionalität von 1,9 bis 2,05.

Die Komponente a3) enthält mindestens eine ionische oder potentiell ionische Verbindung mit mindestens einer Säuregruppe und mindestens einer gegenüber Isocyanatgruppen reaktionsfähigen Gruppe. Geeignete Säuregruppen sind z.B. Carboxyl- und Sulphonsäuregruppen. Geeignete gegenüber Isocyanatgruppen reaktionsfähige Gruppen sind z.B. Hydroxyl- und/oder Aminogruppen.

Bevorzugt handelt es sich bei Komponente a3) um mindestens eine, bevorzugt eine oder zwei Hydroxylgruppen aufweisende Carbonsäure. Besonders bevorzugt wird als Komponente a3) Dimethylolpropionsäure, Dimethylolbuttersäure und/oder Hydroxypivalinsäure, ganz besonders bevorzugt wird Dimethylolpropionsäure verwendet.

Ebenfalls geeignete Säuren sind beispielsweise andere 2,2-Bis(hydroxymethyl)-alkancarbonsäure, wie z.B. Dimethylolessigsäure oder 2,2-Dimethylolpentansäure, Dihydroxybernsteinsäure, Michael-Additionsprodukte von Acrylsäure an Amine wie z.B. Isophorondiamin oder Hexamethylendiamin, oder Gemische derartiger Säuren und/oder Dimethylolpropionsäure und/oder Hydroxypivalinsäure. Ebenfalls möglich ist die Verwendung von gegebenenfalls Ethergruppen aufweisenden Sulfonsäurediolen der in US-A 4 108 814 beschriebenen Art oder auch von 2-Aminoethyl-aminoethansulphonsäure.

Die freien Säuregruppen stellen "potentiell ionische" Gruppen dar, während es sich bei den durch Neutralisation mit Neutralisationsmitteln erhaltenen salzartigen Gruppen, Carboxylat- bzw. Sulphonatgruppen, um "ionischen" Gruppen handelt.

Geeignete Polyisocyanate der Komponente a4) sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Beispiele geeigneter Polyisocyanate a4) sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,3- und 1,4-Bis-(2-isocyanato-prop-2-yl)-benzol (TMXDI), 1,3-Bis(isocyanato-methyl)benzol (XDI), 1,5-Naphthylendiisocyanat, 2,4'- oder 4,4'-Diphenylmethandiisocyanat, Triphenylmethan-4,4',4"-triisocyanat oder Derivate basierend auf den vorstehend genannten Diisocyanaten mit Uretdion-, Isocyanurat- , Urethan-, Allophanat-, Biuret-, Iminooxadiazindion- und/oder Oxadiazintrionstruktur mit mehr als 2 NCO Gruppen.

Als Beispiel für ein nicht-modifiziertes Polyisocyanat mit mehr als 2 NCO-Gruppen pro Molekül sei z.B. 4-Isocyanatomethyl-1,8-octandiisocyanat (Nonantriisocyanat) genannt.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen. Besonders bevorzugt sind Hexamethylendiisocyanat, Isophorondiisocyanat, die isomeren Bis-(4,4'-isocyanatocyclohexyl)methane sowie deren Mischungen.

Das Verfahren zur Herstellung der wässrigen Polyesterpolyurethan-Dispersion A) kann in einer oder mehreren Stufen in homogener oder bei mehrstufiger Umsetzung, teilweise in disperser Phase durchgeführt werden. Nach vollständig oder teilweise durchgeführter Polyaddition aus a1) bis a4) erfolgt ein Dispergier-, Emulgier- oder Lösungsschritt. Im Anschluss erfolgt gegebenenfalls eine weitere Polyaddition oder Modifikation in disperser Phase.

Zur Herstellung der wässrigen Polyesterpolyurethan-Dispersionen A) können alle aus dem Stand der Technik bekannten Verfahren wie z.B. Prepolymer-Mischverfahren, Acetonverfahren oder Schmelzdispergierverfahren verwendet werden.

Geeignete Neutralisationsmittel, die bereits bei Umsetzung der Komponenten a1) bis a4) zugegen sein können sind z.B. Triethylamin, N-Methylmorpholin, Dimethylisopropylamin, Ethyldiisopropylamin, Dimethylcylohexylamin, Triethanolamin, Dimethylethanolamin, Ammoniak, Kaliumhydroxid und/oder Natriumhydroxid.

Die hydroxyfunktionellen Polyesterpolyurethan-Dispersionen A) enthalten in der Regel 0 bis 10 Gew.-%, bevorzugt 0 bis 3 Gew.-% organische Lösemittel.

Die gegebenenfalls durchgeführte destillative Entfernung überschüssiger Lösemittelmengen kann z.B. unter reduziertem Druck bei z.B. 20 bis 80°C während oder nach dem Dispergieren in/mit destilliertem Wasser erfolgen.

Der Festkörpergehalt der Polyesterpolyurethan-Dispersionen A) liegt bei 40 bis 60 Gew.-%, bevorzugt bei 50 bis 57 Gew.-%.

Die Dispersionen weisen Teilchendurchmesser, bestimmt z.B. durch LKS-Messungen, von 80 bis 500 nm, bevorzugt von 100 bis 200 nm auf.

Die hydroxyfunktionellen, Urethangruppen aufweisenden Polyester-Dispersionen A) werden in Kombination mit, gegebenenfalls hydrophilierten, Polyisocyanaten B) mit freien Isocyanatgruppen in wässrigen 2-Komponenten-Beschichtungsmitteln verwendet. In dieser Verwendung hat das Beschichtungsmittel eine begrenzte Topfzeit von bis zu 24 Stunden. Die daraus hergestellten Beschichtungen sind bei Raumtemperatur bis 120 °C aushärtbar.

Die mittlere Funktionalität der Polyisocyanate B) beträgt 2,5 bis 3,3, bevorzugt 2,8 bis 3,0.

Als Komponente B) werden Polyisocyanate mit freien Isocyanat-Gruppen eingesetzt. Geeignet sind Polyisocyanate beispielsweise auf Basis von Isophorondiisocyanat, Hexamethylendiisocyanat, 1,4-Diisocyanatocyclohexan, Bis-(4-isocyanatocyclohexan)-methan oder 1,3-Diisocyanatobenzol oder auf Basis von Lackpolyisocyanaten wie Allophanat-, Uretdion-, Biuret- oder Isocyanuratgruppen aufweisenden Polyisocyanaten von 1,6-Diisocyanatohexan, Isophorondiisocyanat oder Bis-(4-iso-cyanatocyclohexan)-methan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartigen Polyhydroxylverbindungen andererseits.

Bevorzugt als Komponenten B) sind niedrigviskose, hydrophobe oder hydrophilierte Polyisocyanate mit freien Isocyanatgruppen auf Basis aliphatischer, cycloaliphatischer, araliphatischer und/oder aromatischer Isocyanate, besonders bevorzugt sind aliphatische oder cycloaliphatische Isocyanate. Diese Polyisocyanate weisen bei 23°C im Allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden. Wasserlösliche bzw. dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich.

Zur Hydrophilierung der Polyisocyanate B) ist es bevorzugt die Polyisocyanate mit unterschüssigen Mengen an einwertigen, hydrophilen Polyetheralkoholen umzusetzen. Die Herstellung derartiger hydrophilierter Polyisocyanate ist beispielsweise in der EP-A 0 540 985 beschrieben. Ebenfalls bevorzugt sind auch die in der EP-A 0 959 087 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 100 24 624 beschrieben sind. Ebenso möglich ist die Hydrophilierung durch Zusatz handelsüblicher Emulgatoren.

Besonders bevorzugt werden als Komponente B) solche Mischungen eingesetzt, die flexibilisierte Polyisocyanatkomponenten B) enthalten, welche leicht durch Prepolymerisierung der oben genannten Polyisocyanatkomponenten mit bevorzugt di- bis trifunktionellen Polyolkomponenten, besonders bevorzugt Polyolkomponenten wie sie unter Aufbaukomponenten a1) bereits genannt wurden, erhalten werden.

Als weitere bevorzugte Härterkomponente kommen dabei sind mit Sulfonatgruppen modifizierte Polyisocyanate, wie sie z.B. in der DE-A 100 24 624 beschrieben werden, zum Einsatz.

Selbstverständlich ist es auch möglich, die Komponente B) als sogenannte blockierte Polyisocyanate einzusetzen. Die Blockierung der oben genannten Polyisocyanate mit freien Isocyanat-Gruppen erfolgt nach bekanntem Stand der Technik durch Umsetzung der Polyisocyanate mit freien Isocyanat-Gruppen mit geeigneten Blockierungsmitteln. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam Phenole, Amine wie Diisopropylamin oder Dibutylamin, Dimethylpyrazol oder Triazol sowie Malonsäuredimethylester, Malonsäurediethylester oder Malonsäuredibutylester.

Werden die Polyesterpolyurethan-Dispersionen A) alleine auf Substrate, bevorzugt Folien, aufgetragen, so werden klare, sehr gut verlaufende Schichten ohne Fehlstellen bzw. Krater erhalten und es sind sehr hohe Schichtstärken bis über 100 µm möglich. Die Dispersionen zeigen keine ausgeprägte physikalische Trocknung, dass heißt die Schichten bleiben mehr oder weniger klebrig bzw. griffig. Ausgehärtete, klebfreie und harte Schichten erhält man erst durch Kombination mit mindestens einem Vernetzerpolyisocyanat B) und erfolgter Aushärtung.

Der auf den erfindungsgemäßen Trägerfolien als Beschichtung aufgetragene wässrige 2K-Polyurethan-Lack kann neben den Komponenten A) und B) gegebenenfalls die üblichen Hilfs- und Zusatzmittel C) enthalten, wie organische und/oder anorganische Pigmente bzw. Metallic-Pigmente auf der Basis von Aluminiumflocken, Füllstoffe wie beispielsweise Ruß, Kieselsäure, Talkum, Kaolin, Glas als Pulver oder in Form von Fasern und Mischungen dieser und/oder anderer für die Herstellung von Lacken, Beschichtungen und Klebstoffen gebräuchlichen Materialien.

Zur Erzielung besonderer Effekte ist es auch möglich, geringe Mengen an in der Lack- und Klebstoffindustrie üblichen Hilfsmitteln bei der Herstellung der Polyester-Dispersion A) zuzusetzen, wie z.B. oberflächenaktive Substanzen, Emulgatoren, Stabilisatoren, Antiabsetzmittel, UV-Stabilisatoren, Katalysatoren für die Vernetzungsreaktion, Entschäumer, Antioxidantien, Hautverhinderungsmittel, Verlaufshilfsmittel, Verdicker und/oder Bakterizide.

In einer bevorzugten Ausführungsform enthält der wässrige 2K-Polyurethan-Lack ein Hydroxylgruppen enthaltendes Silikonadditiv, mit dem eine besonders glatte Oberfläche erhalten wird.

Die zur Herstellung der erfindungsgemäßen Trägerfolie als Beschichtung eingesetzten wässrigen 2K-Polyurethan-Lacke zeichnen sich durch eine sehr gute Verarbeitbarkeit aus. Die resultierenden Beschichtungen II) weisen eine ausgezeichneter Filmoptik und Verlauf, sehr geringe Krateranfälligkeit, gute Beständigkeitseigenschaften, ein ausgeglichenes Härte-/Elastizitätsniveau und eine sehr gute Lagerstabilität auf. Die erfindungsgemäßen Trägerfolien weisen darüber hinaus eine ausgezeichnete Blockfestigkeit aus, d.h. die Trägerfolien lassen sich nach dem Aufrollen problemlos wieder von der Rolle abrollen.

Die Herstellung der Beschichtung II) auf der Trägerfolie I) kann nach den unterschiedlichen Spritzverfahren, wie beispielsweise Luftdruck-, Airless- oder Elektrostatik-Spritzverfahren unter Verwendung von Ein- oder gegebenenfalls Zweikomponenten-Spritzanlagen erfolgen. Die Lackbeschichtungsmittel können jedoch auch nach anderen Methoden, beispielsweise durch Streichen, Rollen, Tauchen oder Rakeln appliziert werden.

Um Teilbereiche auf der Folie zu beschichten, wird z.B. Siebdruck bevorzugt eingesetzt. Die Schichtdicken können zwischen 2 Mikrometer und 100 Mikrometer sein, bevorzugt zwischen 5 und 75 µm, besonders bevorzugt zwischen 5 und 50 µm.

Für die Herstellung der erfindungsgemäßen Trägerfolien können als Trägerfolie I) übliche Kunststofffolien, z.B. aus PET, Polycarbonat, PMMA, Polysulfon etc. eingesetzt werden. Die Folien können gegebenenfalls durch Verfahren wie Coronabehandlung etc. vorbehandelt werden. Die Trägerfolien I) weisen bevorzugt Dicken zwischen 2 und 2.000 Mikrometer auf. Bevorzugt werden Trägerfolien I) aus Polycarbonat und Polycarbonat-Blends verwendet. Bei den Trägerfolien I) kann es sich auch um sogenannte Verbundfolien aus mehreren Kunststoffschichten handeln.

Als geeignete Trägerfolie I) sind prinzipiell alle an sich bekannten oder kommerziell erhältlichen Polycarbonate geeignet. Die als Trägerfolie I) geeigneten Polycarbonate haben bevorzugt ein Molekulargewicht im Bereich von 10.000 bis 60.000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bevorzugtes Bisphenol ist 2,2-Di(4-hydroxyphenyl)propan, im allgemeinen - wie auch im folgenden- als Bisphenol A bezeichnet.

Anstelle von Bisphenol A können auch andere aromatische Dihydroxyverbindungen verwendet werden, insbesondere 2,2-Di(4-hydroxyphenyl)pentan, 1,6-Dihydroxynaphthalin, 4,4'-Dihydroxydiphenylsulfan, 4,4'-Dihydroxydiphenylether, 4,4'-Dihydroxydiphenylsulfon, 4,4'-Dihydroxydiphenylmethan, 1,1-Di(4-hydroxyphenyl)ethan, 4,4'Dihydroxydiphenyl- oder Dihydroxydiphenylcycloalkane, bevorzugt Dihydroxydiphenylcyclohexane oder Dihydroxycyclopentane sowie Mischungen der vorgenannten Dihydroxyverbindungen.

Besonders gut als Trägerfolie I) geeignete Polycarbonate sind solche, die Einheiten enthalten, welche sich von Resorcinol- oder Alkylresorcinolestern ableiten, wie sie beispielsweise in WO 00/15718 oder WO 00/26274 beschrieben werden; solche Polycarbonate werden beispielsweise von General Electric Company unter der Marke Sollx^{®} vertrieben.

Neben diesen Trägerfolien können auch Blends oder Mischungen von Kunststoffen eingesetzt werden. Besonders vorteilhaft haben sich Blends aus Polycarbonat und Polyestern, z.B. Polybutylenterephthalat oder Polyethylenterephthalat, und Polyestern aus Cyclohexandicarbonsäure und Cyclohexandimethanol erwiesen. Solche Produkte werden unter den Bezeichnungen Bayfol^{®} von Bayer MaterialScience AG oder Xylex^{®} von General Electric Company vertrieben.

Es können auch Copolycarbonate gemäß der US-A 3 737 409 verwendet werden; von besonderem Interesse sind dabei Copolycarbonate auf der Basis von Bispehnol A und Di-(3,5-dimethyl-dihydroxyphenyl)sulfon, die sich durch eine hohe Wäremformbeständigkeit auszeichnen. Ferner ist es möglich, Mischungen unterschiedlicher Polycarbonate einzusetzen.

Schlagzähes PMMA ist ein Polymethylmethacrylat, das durch geeignete Zusätze schlagzäh ausgerüstet ist und vorzugsweise eingesetzt wird. Geeignete schlagzähmodifizierte PMMA sind beispielsweise beschrieben von M. Stickler, T. Rhein in Ullmann's Encyclopedia of Industrial Chemistry Vol. A 21, Seiten 473-486, VCH Publishers Weinheim, 1992, und H. Domininghaus, Die Kunststoffe und ihre Eigenschaften, VDI-Verlag Düsseldorf, 1992.

Für die Herstellung der Trägerfolie I) kommen alle bekannten Verfahren, beispielsweise durch Adapter- oder Co-Extrusion oder Aufeinanderkaschieren von Schichten in Frage. Darüber hinaus kann die Trägerfolie auch aus Lösung gegossen werden.

Die Oberfläche der Trägerfolie I) kann glänzend, strukturiert oder mattiert sein.

Als Hinterspritz-, Hintergieß- oder Hinterpresskunststoffe kommen alle bekannten thermoplastischen polymeren Materialien in Frage. Geeignet sind z.B. thermoplastische Polymere wie Polyolefine, z.B. Polyethylen oder Polypropylen, Polyester, z.B. Polybutylenterephthalat (PBT) und Polyethylenterephthalat (PET), Polycycloolefine, Poly(meth)acrylate, Polyamide, Polycarbonate, Polyurethane, Polyacetale, z.B. Polyoxymethylen (POM), Polystyrole, Polyphenylenether, Polysulfone, Polyethersulfone, Polyetherketone, Styrol(co)polymere oder Mischungen der vorgenannten Polymere.

Besonders geeignete Polycarbonate sind Bisphenol-A- und TMC-Bisphenol-Polycarbonate. Bevorzugte Polymermischungen enthalten Polycarbonat und Polybutylenterephthalat oder Polycarbonat und ABS-Polymerisat.

Aufgrund der sehr guten Verformungseigenschaften und der guten Haftung sowie des guten Verstreckungsverhaltens der Beschichtung II) in der Trägerfolie können nicht nur ebenförmige, d.h. im wesentlichen flächige, oder schalenförmige Formteile, sondern auch solche mit Einbuchtungen und Ausformungen, auch senkrechten Ausformungen oder Vertiefungen, wie z.B. Handytastaturen, hergestellt werden. Die guten, mit den Trägerfolien einhergehenden Oberflächeneigenschaften sind somit auch bei Verbundformteilen mit anspruchsvoller Geometrie zugänglich.

Die erfindungsgemäßen Trägerfolien werden in Telekommunikationsgeräten, im Fahrzeug-, Schiff und Flugzeugbau verwendet.

Gegenstand der vorliegenden Erfindung ist auch die Verwendung der erfindungsgemäßen Trägerfolie zur Ausrüstung von Kunststoffformteilen, bevorzugt Bildschirmgehäuse.

Die Erfindung soll anhand der nachfolgenden Beispiele näher erläutert werden.

### Beispiele

Soweit nicht abweichend angegeben sind alle Prozentangaben als Gewichtsprozent zu verstehen.

### Verwendete Substanzen und Abkürzungen:

- BYK^{®} 348:: Benetzungsmittel (BYK-Chemie, Wesel, DE)
- BYK^{®} 337:: Oberflächenadditiv (BYK-Chemie, Wesel, DE)
- MPA:: 1-Methoxy-2-propylacetat
- Tinuvin^{®} 292: HALS-Amin (Ciba GmbH, Lampertheim, DE)
- Tinuvin^{®} 384-2: UV-Absorber (Ciba GmbH, Lampertheim, DE)
- Bayhydur^{®} VPLS 2306: Elastifiziertes, hydrophiles Polyisocyanat, (Bayer Material Science AG, DE); mittlere Funktionalität 2,5.
- Bayhydur^{®} XP 2655: Hydrophiles Polyisocyanat, (Bayer Material Science AG, DE); mittlere Funktionalität 3,1.

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

### Beispiel 1 Polyesterpolyol

In ein 151-Reaktionsgefäß mit Rührer, Heizvorrichtung und Wasserabscheider mit Kühlvorrichtung wurden 1281 g Phthalsäureanhydrid, 5058 g Adipinsäure, 6387 g Hexandiol-1,6 und 675 g Neopentylglykol eingewogen und unter Stickstoff in einer Stunde auf 140°C aufgeheizt. In weiteren 9 Stunden wurde auf 220°C aufgeheizt und so lange bei dieser Temperatur kondensiert, bis eine Säurezahl kleiner 3 erreicht war. Das so erhaltene Polyesterpolyol hatte eine Viskosität (bestimmt als Auslaufzeit einer 80 %igen Lösung des Polyesters in Methoxypropylacetat im DIN 4-Becher bei 23°C) von 54 Sekunden und eine OH-Zahl von 160 mg KOH/g.

### Beispiel 2 Herstellung eines Polycarbonatdiols auf Basis von 1,4-Butandiol und 1,6-Hexandiol

1223 g 1,4-Butandiol und 535 g 1,6 Hexandiol wurden in einem Kolben vorgelegt und auf 100°C aufgeheizt. Schließlich wurden ca. 2 1/h Stickstoff in das Diolgemisch eingeleitet und 20 mbar Vakuum angelegt und das Gemisch solange entwässert (ca. 2 Stunden), bis der Wassergehalt ≤ 0,1 % betrug.

Danach wurden 0,44 g Ytterbium(III)acetylacetonat zugegeben, das Diolgemisch auf 110°C aufgeheizt. Anschließend wurden in ca. 20 Minuten 2297 g Dimethylcarbonat zulaufen lassen und das Reaktionsgemisch 24 h unter Rückfluß gehalten. Schließlich wurde die Temperatur auf 150°C erhöht und anfallendes Destillat entfernt. Danach erfolgte eine weitere Erhöhung auf 180°C gefolgt von einer weiteren Destillationsphase.

Das Reaktionsgemisch wurde auf 130°C abgekühlt und der Druck auf 10 mbar gesenkt. Anschließend erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten.

Anschließend wurde das Reaktionsgemisch auf 130°C abgekühlt und der Druck auf 10 mbar gesenkt. Danach erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten. Das Reaktionsgemisch wurde auf Raumtemperatur abgekühlt und die Kenndaten des Produktes bestimmt.

Es wird ein Polycarbonatdiol mit einer Hydroxylzahl von 57,3 mg KOH/g sowie einer Viskosität von 115 Pas bei 23°C erhalten.

### Beispiel 3 Herstellung eines Polycarbonatdiols auf Basis von 1,4-Butandiol und 1,6-Hexandiol

1239 g 1,4-Butandiol und 542 g 1,6 Hexandiol wurden in einem Kolben vorgelegt und auf 100°C im Ölbad aufgeheizt. Schließlich wurden ca. 2 1/h Stickstoff in das Diolgemisch eingeleitet und 20 mbar Vakkum angelegt und das Gemisch solange entwässert (ca. 2 Stunden) bis der Wassergehalt ≤ 0,1% betrug.

Danach wurden 0,44 g Ytterbium(III)acetylacetonat zugegeben das Diolgemisch auf 110°C aufgeheizt. Anschließend wurden in ca. 20 Minuten 2180 g Dimethylcarbonat zulaufen lassen und das Reaktionsgemisch 24 h unter Rückfluß gehalten. Schließlich wurde die Temperatur auf 150°C erhöht und anfallendes Destillat entfernt. Danach erfolgte eine weitere Erhöhung auf 180°C gefolgt von einer weiteren Destillationsphase.

Das Reaktionsgemisch wurde auf 130°C abgekühlt und der Druck auf 10 mbar gesenkt. Anschließend erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten.

Anschließend wurde das Reaktionsgemisch auf 130°C abgekühlt und der Druck auf 10 mbar gesenkt. Danach erfolgte eine Anhebung der Ölbadtemperatur von 130°C auf 180°C binnen 2 h, wobei die Destillationskopftemperatur 60°C nicht überstieg. Nach Erreichen von 180°C wurde diese Temperatur 6 h gehalten. Danach wurde das Reaktionsgemisch auf Raumtemperatur abgekühlt und die Kenndaten des Produktes bestimmt.

Es wird ein Polycarbonatdiol mit einer Hydroxylzahl von 113,4 mg KOH/g sowie einer Viskosität von 13600 mPas bei 23°C erhalten.

### Beispiel 4 Hydroxyfunktionelle PUR-Dispersion

In einem 61-Reaktionsgefäß mit Kühl-, Heiz- und Rührvorrichtung wurden in einer Stickstoffatmosphäre 1170 g des Polyesterpolyols aus Beispiel 1 vorgelegt und zusammen mit 1140 g Polycarbonatdiol aus Beispiel 2, 90 g Trimethylolpropan, 120 g Dimethylolpropionsäure und 3,8 g Zinn-(II)-octoat auf 130°C aufgeheizt und 30 min homogenisiert. Anschließend wurde auf 80°C abgekühlt, 480 g Hexamethylendiisocyanat unter kräftigen Rühren zugegeben, unter Ausnutzung der Exothermie auf 140°C aufgeheizt und das Gemisch solange bei dieser Temperatur gehalten, bis sich keine NCO-Gruppen mehr feststellen ließen.

Anschließend wurde das so erhaltene Polyurethan auf 90°-100°C abgekühlt, 47 g Dimethylethanolamin (Neutralisationsgrad 60 %) zugesetzt, 15 Minuten homogenisiert und mit 2270 g demineralisiertem Wasser dispergiert. Die so erhaltene wässrige Polyurethanharz-Dispersion hatte einen OH-Gehalt (100 %ig) von 1,4 %, eine Säurezahl (100 %ig) von 16,8, eine mittlere Teilchengröße von 110 nm und eine Viskosität von ca. 2020 mPas (23°C; D = 40 s⁻¹) bei einem Festkörpergehalt von 51,2 Gew.-%.

### Beispiel 5 Hydroxyfunktionelle PUR-Dispersion

In einem 61-Reaktionsgefäß mit Kühl-, Heiz- und Rührvorrichtung wurden in einer Stickstoffatmosphäre 1170 g des Polyesterpolyols aus Beispiel 1 vorgelegt und zusammen mit 1140 g Polycarbonatdiol aus Beispiel 3, 90 g Trimethylolpropan, 120 g Dimethylolpropionsäure, 125 g N-Methylpyrrolidon und 3,8 g Zinn-(II)-octoat auf 130°C aufgeheizt und 30 min homogenisiert. Anschließend wurde auf 80°C abgekühlt, 480 g Hexamethylendiisocyanat unter kräftigen Rühren zugegeben, unter Ausnutzung der Exothermie auf 140°C aufgeheizt und das Gemisch solange bei dieser Temperatur gehalten, bis sich keine NCO-Gruppen mehr feststellen ließen.

Anschließend wurde das so erhaltene Polyurethan auf 90°-100°C abgekühlt, 39 g Dimethylethanolamin (Neutralisationsgrad 50 %) zugesetzt, 15 Minuten homogenisiert mit 2270 g demineralisiertem Wasser dispergiert. Die so erhaltene wässrige Polyurethanharz-Dispersion hatte einen OH-Gehalt (100 %ig) von 1,4 %, eine Säurezahl (100 %ig) von 16,3, eine mittlere Teilchengröße von 150 nm und eine Viskosität von ca. 1680 mPas (23°C; D = 40 s⁻¹) bei einem Festkörpergehalt von 55,9 Gew.-%.

### Beispiel 6 Kratzfester Klarlack (Vergleichsbeispiel)

### Zubereitung des Stammlackes (Komponente A)

Zu 56,80 g der Polyurethan-Dispersion aus Beispiel 5 wurden 0,45 g Byk^{®} 347 , 0,77 g Byk^{®} 337 und 22,17 g destilliertes Wasser gegeben und innig verrührt.

### Zubereitung der Härterlösung (Komponente B)

Zu 8,60 g Bayhydur^{®} XP 2655 wurden 0,77 g Tinuvin^{®} 292 (50 % ige Lösung in MPA), 1,16 g Tinuvin^{®} 384-2 (50 % ige Lösung in MPA) sowie 9,28 g MPA gegeben und innig verrührt.

### Beispiel 7 Kratzfester Klarlack

### Zubereitung des Stammlackes (Komponente A)

Zu 51,59 g der Polyurethan-Dispersion aus Beispiel 5 wurden 0,45 g Byk^{®} 347 , 0,77 g Byk^{®} 337 und 24,59 g destilliertes Wasser gegeben und innig verrührt.

### Zubereitung der Härterlösung (Komponente B)

Zu 11,34 g einer Mischung aus Bayhydur^{®} XP 2655 / Bayhydur^{®} VP LS 2306 (je 50 Gew.-%), wurden 0,77 g Tinuvin^{®} 292 ( 50 % ige Lösung in MPA) , 1,16 g Tinuvin^{®} 384-2 (50 % ige Lösung in) sowie 9,33 g 1-Methoxypropylacetat (MPA) gegeben und innig verrührt.

### Beispiel 8 (Vergleich)

Unlackierte Polycarbonatfolie (Filmdicke : 175 µm)

### Vermischung des Stammlackes mit dem Härter und Applikation

Die oben aufgeführten Komponenten A (Stammlack) und B (Härter) wurden jeweils zusammengemischt und innig verrührt (Dispermat, 2 min. bei 1000 U/min). Anschließend wurden die Mischungen auf Polycarbonatfolie (175 µm) aufgerakelt, 5 min bei Raumtemperatur abgelüftet und anschließend 45 min. bei 80°C im Umluftofen getrocknet. Es wurden hochglänzende Filme mit einer Trockenfilmschichtdicke von ca. 15 µm erhalten. Eine Übersicht über die ermittelten lacktechnischen Eigenschaften der Filme ist in der Tabelle dargestellt.

### Lacktechnische Eigenschaften:

**Tabelle 1:**

| **Beispiel** | **6** **(Vergleich)** | **7** **(erfindungsgemäß)** | **8** **(unlackierte PC-Folie, Vergleich)** |
|---|---|---|---|
| Haftung | Gt0 | Gt0 | - |
| Kratzfestigkeit | 1 | 0 | 5 |
| Chemikalienbeständigkeit | | | |
| Isopropanol | 0 | 0 | 0 |
| Rapsöl | 0 | 0 | 3 |
| Nivea - Handcreme | 0 | 0 | 0 |

### Prüfmethoden :

**Haftung :** Gemäß der DIN EN ISO 2409

### Kratzfestigkeit :

Die Kratzfestigkeit wurde mit einem Crockmeter Atlas CM6 durchgeführt. Die Filmoberfläche wurde mit einem Polierpapier (9 µm, 10 bzw. 40 Doppelhübe) verkratzt. Die Beurteilung der verkratzen Filmoberfläche erfolge nach der DIN 53230:
0 : keine Kratzer erkennbar
1 : vereinzelt Kratzer erkennbar
2 : Kratzer erkennbar
3 : deutliche Kratzer erkennbar
4 : viele Kratzer erkennbar
5 : sehr viele Kratzer erkennbar

### Chemikalienbeständigkeit :

Prüfung mit Isopropanol , Rapsöl , Nivea-Handcreme.

Belastungsdauer 24 h bei Raumtemperatur. Die Beurteilung der belasteten Filmoberfläche erfolge nach der DIN 53230.

Die DIN 53230 gibt eine relative Bewertungsskala für visuelle Abmusterung an:

**Tabelle 2:**

| **Kennzahl** | **Bedeutung** | **Erläuterungen** |
|---|---|---|
| **0** | **nicht verändert** | |
| **1** | **Spur verändert** | - Quellungsring ist sehr schwach, nur durch Spiegeln im Licht zu erkennen - Quellungsring ist deutlich unterbrochen |
| **2** | **gering verändert** | - Quellungsring ist im Licht erkennbar - Kratzspuren erkennbar |
| **3** | **mittel verändert** | - geschlossener Quellungsring ist deutlich erkennbar - gering ankratzbar |
| **4** | **stark verändert** | - geschlossener Quellungsring ist sehr stark ausgeprägt - ankratzbar |
| **5** | **sehr stark verändert** | - durchkratzbar |

### Tiefziehfähigkeit mittels Hochdruckverformung

Die gemäß der Beispiele 6 und 7 beschichteten Makrofol ® DE 1-1 Folien wurden gemäß DE-A 3840542 verformt. Die Versuche wurden auf einer Hochdruckverformungsanlage der Fa. HDVF Kunststoffmaschinen GmbH, Typ SAMK 360 durchgeführt. Als Verformungswerkzeug wurde ein Handyschalenwerkzeug verwendet. Die Verformungsparameter wurden wie folgt gewählt: Heizrate: 14 sec, Heizfeldereinstellung 240°C - 280°C, Werkzeugtemperatur 80°C, Verformungsdruck 80 bar. Bei den verformten Folien wurde visuell die Haftung, die Rissbildung, sowie die Beschichtung nach der Verformung beurteilt.

### Prüfergebnisse der mit den Lacken 6 und 7 beschichteten Makrofol ® DE 1-1 Folien.

**Tabelle 3:**

| Beispiel | Rissbildung bei 14 sec Heizrate (Werkzeug: Handyschale) |
|---|---|
| 6 | Rissbildung Kante |
| 7 | Fehlerfrei |

Die aufgeführten Ergebnisse belegen, dass nur mit den erfindungsgemäß formulierten Lacken sehr gute Tiefziehfähigkeit der beschichteten Folie erhalten werden kann.

### Maschinelle Beschichtung einer Polycarbonat-Folie

Die Versuche wurden auf der Technikumsanlage gefahren, die wie folgt aufgebaut ist: Die Polycarbonatfolie wird von der Rolle abgerollt und die Kaschierfolie wird von der zu beschichtenden Seite abgezogen. Die Folie gelangt zum Antragswerk, wo der Lack auf die Folie aufgetragen wird. Vom Antragswerk gelangt die Folie in den Trockner, wo das Wasser verdampft und die Lackschicht ausgehärtet wird. Nach dem Durchlauf durch den Trockner wird die Folie wieder am Ende der Anlage aufgerollt.

### Versuchsdurchführung:

Von der 175 µm dicken Polycarbonatfolie (Makrofol^{®} DE 1-1, Bayer MaterialScience AG, DE) wurde die Kaschierfolie abgezogen und zur Beschichtungseinheit transportiert. Dort wurde der Lack aufgetragen und die Folie weiter zum Trockner transportiert, wo der Lack ausgehärtet wurde. Im Trockner reagierte das Lacksystem so weit aus, dass es nach Durchlauf durch den Trockner wieder aufgerollt werden konnte. Auf diese Weise wurde eine Lackschicht von ca. 20 µm erreicht.

### Parameter:

Trocknertemperatur ca. 120-130°C, Trocknerlänge 5 m, Durchlaufgeschwindigkeit 2 m/ min.

## Patentansprüche

1. Beschichtete Trägerfolie, die aus
I) einer thermoplastische Trägerfolie und
II) mindestens einer Beschichtung auf Basis eines wässrigen Zweikomponenten(2K)-Polyurethanlack aufgebaut ist, **dadurch gekennzeichnet, dass** der 2K-Polyurethan-Lack
A) mindestens eine hydroxyfunktionelle Polyesterpolyurethan-Dispersion sowie
B) mindestens einen Polyisocyanat-Vernetzer enthält.

2. Beschichtete Trägerfolie gemäß Anspruch 1, **dadurch gekennzeichnet, dass** das Vernetzungsverhältnis aus Isocyanat-Gruppen aus B) und Hydroxy-Gruppen aus A) zwischen 1,0:1 und 1,6 : 1 liegt.

3. Beschichtete Trägerfolie gemäß Anspruch 1, **dadurch gekennzeichnet, dass** die Polyesterpolyurethan-Dispersion A) als Aufbaukomponenten
a1) lineare oder verzweigte, hydroxyfunktionelle Polyester,
a2) lineare, hydroxyfunktionelle Polycarbonate,
a3) mindestens eine ionische oder potentiell ionische Verbindung mit mindestens einer Säuregruppe und mindestens einer gegenüber Isocyanatgruppen reaktionsfähigen Gruppe,
a4) mindestens ein (cyclo)aliphatischen Diisocyanat sowie
a5) niedermolekulare hydroxy- und/ oder aminofunktionelle Verbindungen enthält.

4. Beschichtete Trägerfolie gemäß Anspruch 3, **dadurch gekennzeichnet, dass** die Polyesterpolyurethan-Dispersion A) 20 bis 50 Gew.-% Komponente a1), 20 bis 50 Gew.-% Komponente a2), 2 bis 6 Gew.-% Komponente a3), 10 bis 30 Gew.-% Komponente a4), 0,5 bis 10 Gew.-% Komponente a5) enthält, wobei sich die Prozentangaben a1) bis a5) zu 100 Gew.-% ergänzen.

5. Beschichtete Trägerfolie gemäß Anspruch 3, **dadurch gekennzeichnet, dass** die über die Komponente a3) eingebauten Säurezahlen der hydroxyfunktionellen Polyesterpolyurethan-Dispersion A) bei 5,0 bis 14,5 mg KOH/g Substanz, jeweils bezogen auf die wässrige Dispersion des Polyester-Polyurethans, liegen.

6. Beschichtete Trägerfolie gemäß Anspruch 1, **dadurch gekennzeichnet, dass** das mittlere Molekulargewicht M_{w} der Polyesterpolyurethan-Dispersion A), bestimmbar per Gelpermeationschromatographie mit Polystyrol als Standard, bei 5.000 bis 15.000 g/mol liegt.

7. Beschichtete Trägerfolie gemäß Anspruch 3, **dadurch gekennzeichnet, dass** Polyester a1) Umsetzungsprodukte von
a1ᵢ 30 bis 77 Gew.-% mindestens einer, mindestens difunktionellen Carbonsäure bzw. deren Anhydrids,
a1ᵢᵢ) 23 bis 70 Gew.-% mindestens eines Diols,
a1ᵢᵢᵢ) 0 bis 10 Gew.-% mindestens eines Alkohols mit mehr als 2 Hydroxylgruppen,
a1ᵢᵥ) 0 bis 10 Gew.-% sonstige hydroxy- und/oder carboxyfunktioneller Komponenten und/oder Caprolacton sind.

8. Beschichtete Trägerfolie gemäß Anspruch 3, **dadurch gekennzeichnet, dass** Polycarbonatpolyole a2) solche sind, die mindestens 25 Gew.-% 1,4-Butandiol als Aufbaukomponente enthalten und eine mittlere Hydroxylfunktionalität von 1,6 bis 4 und ein zahlenmittleres Molekulargewicht von 240 bis 8000 g/mol aufweisen.

9. Beschichtete Trägerfolie gemäß Anspruch 1, **dadurch gekennzeichnet, dass** die Trägerfolie I) aus Polycarbonat oder Polycarbonat-Blends besteht.

10. Verwendung der beschichteten Trägerfolie gemäß Anspruch 1 zur Ausrüstung von Kunststoffformteilen.

11. Verwendung gemäß Anspruch 8, **dadurch gekennzeichnet, dass** das Kunststoffformteil ein Bildschirmgehäuse ist.
